# FASCICULE DE BREVET EUROPEEN

(11) **EP 0 610 115 B1**
(45) Date de publication et mention de la délivrance du brevet: **04.06.1997**
(21) Numéro de dépôt: 94400179.1
(22) Date de dépôt: 27.01.1994
(51) Int. Cl.: B64C 25/42, B60T 13/66, B60T 8/32

(54) **Procédé de pilotage d'un dispositif de freinage électro-hydraulique d'un train de roues d'aéronef, et dispositif de mise en oeuvre dudit procédé**
Steuerungsverfahren für eine elektrohydraulische Bremsvorrichtung eines Flugzeugsradsatzes und Vorrichtung zur Durchführung des Verfahrens
Control system for electrohydraulic brake installation on aircraft landing gears, and device for implementing said system

(30) Priorité: 01.02.1993 FR 9301042
(43) Date de publication de la demande: 10.08.1994
(73) Titulaire: MESSIER BUGATTI, F-78140 Velizy Villacoublay (FR)
(72) Inventeur: Lasbleis, Thierry, F-92140 Clamart (FR)
(74) Mandataire: Jaunez, Xavier

(56) Documents cités:
- EP-A- 0 329 373
- EP-A- 0 353 506
- EP-A- 0 384 071
- EP-A- 0 498 714
- FR-A- 2 305 775

## Description

La présente invention concerne le freinage contrôlé d'un train de roues d'aéronef.

Le freinage contrôlé d'un train de roues peut être réparti sur les différents freins de roues, ou encore être organisé en alternance sur différents groupes de freins, avec dans ce cas un actionnement de la moitié des freins et un relâchement de l'autre moitié des freins. Lors du roulage au sol d'un aéronef, en dehors du décollage et de l'atterrissage, c'est-à-dire à des vitesses faibles généralement inférieures à des vitesses de 70 à 80 km/h, il peut s'avérer en effet intéressant de n'actionner qu'une partie des freins de roues en vue d'améliorer le confort des passagers et/ou de diminuer l'usure des freins en carbone, ce qui conduit à un freinage plus progressif que lors d'un actionnement de l'ensemble des freins. L'actionnement des freins est alors alterné pour différents groupes de freins pour éviter un échauffement excessif de certains freins par rapport aux autres.

Dans tous les cas, qu'il s'agisse d'un freinage organisé de façon globale ou de façon partielle avec alternance entre groupes de freins, on cherche autant que faire se peut à optimiser la précision du freinage, notamment aux faibles vitesses et à faibles décélérations commandées.

Le problème de la contrôlabilité du freinage à faible vitesse et à faible décélération commandée se pose de manière particulièrement aiguë pour les gros porteurs, car la puissance des freins est telle qu'il est souvent difficile de restituer avec précision une loi parfaitement répétitive liant la position des pédales de frein à la décélération de l'aéronef, et le confort des passagers est d'autant plus grand que le pilote parvient à contrôler le freinage.

On a proposé il y a une vingtaine d'années d'agencer un système de commande de freins à disques avec un asservissement du couple de freinage en fonction de la vitesse de l'avion, par exemple avec deux lois d'asservissement comme illustré dans US-A-4.043.607. Ce type de système est peu satisfaisant pour la précision du freinage et sa répétabilité pour un enfoncement donné des pédales de freinage.

Plus récemment, on a proposé de désactiver (les spécialistes anglo-saxons utilisent les termes "disable" ou "inhibit") sélectivement l'un au moins des freins, en s'attachant à ne pas perturber la stabilité directionnelle de l'avion, comme illustré dans EP-A-0 329 373. Le principe retenu pour la désactivation (ou neutralisation) est alors un principe de tout ou rien pour la pression commandée, et cette désactivation n'est effective que pour des enfoncements faibles ou modérés des pédales de freinage. De ce fait, la transition d'un mode à freinage partiel (dans lequel certains seulement des freins sont actionnés) au mode de freinage nominal (dans lequel tous les freins sont actionnés) perturbe nécessairement la continuité du freinage (la discontinuité dans la pression exercée sur les freins pouvant notamment affecter le confort des passagers) et/ou la répétitivité du freinage en fonction de l'enfoncement des pédales (la discontinuité dans la sensation de freinage perçue par le pilote pouvant compliquer l'appréciation par le pilote du dosage nécessaire dans son action sur les pédales de freinage).

On pourra se référer plus particulièrement à EP-A-0 384 071 dans lequel est proposé un système reprenant le même principe de désactivation (le texte utilise le mot "inhibiting") d'un groupe de freins, la désactivation intervenant en fonction de la vitesse de roue mesurée.

Plus précisément, EP-A-0 384 071 décrit un procédé de pilotage d'un dispositif de freinage électro-hydraulique d'un train de roues d'aéronef, dont chaque roue est équipée d'un frein actionné à partir de pédales de frein, par une servo-valve commandée électriquement par une unité de pilotage qui mesure une information correspondant à l'enfoncement desdites pédales, consistant, lorsque l'aéronef roule à faible vitesse, à organiser séparément le freinage pour les roues d'un premier groupe de roues comportant la moitié des roues concernées, et pour les roues d'un deuxième groupe de roues comportant l'autre moitié des roues concernées, conformément au préambule de la revendication 1.

Le pilotage du freinage décrit dans le document précité est basé sur un principe de tout ou rien, à partir d'un seuil prédéterminé de pression. La transition d'un mode à freinage partiel au mode de freinage nominal s'effectue avec une discontinuité brutale dans la pression exercée pour avoir instantanément la même pression dans les deux groupes de freins. Cette discontinuité est une source d'inconfort pour les passagers, et une source de trouble pour le pilote qui constate une décélération double pour un même enfoncement des pédales.

L'état de la technique est encore illustré par le document EP-A-0 498 714 de la demanderesse, dans lequel le freinage électro-hydraulique est organisé de façon alternée sur des groupes de freins de roues disposés de façon symétrique.

Plus précisément, EP-A-0 498 714 décrit un dispositif de mise en oeuvre d'un procédé de pilotage du freinage électro-hydraulique d'un train de roues, ledit dispositif comportant une génération hydraulique et une électrovanne associée servant à alimenter un circuit hydraulique auquel se raccordent des servo-valves, une unité de pilotage qui d'une part mesure une information donnée par un capteur associé, correspondant à l'enfoncement des pédales de frein, et d'autre part commande électriquement les servo-valves précitées, chacune de ces servo-valves alimentant un frein respectif de l'un de deux groupes de freins, conformément au préambule de la revendication 7.

Dans le cadre du procédé de pilotage décrit dans le document précité, on effectue une mesure de température immédiate de chaque groupe de freins, et on sélectionne le groupe de freins à commander en fonction de la mesure de la température effectuée. Le pilotage du freinage est alors assuré par une unité de pilotage qui mesure une information correspondant à l'enfoncement des pédales de frein, et qui commande électriquement les servo-valves servant à actionner les freins. Cette technique est favorable pour minimiser l'échauffement des freins, mais ne permet pas d'améliorer de façon déterminante la précision du freinage pour les gros porteurs.

L'état de la technique est également illustré par le document EP-A-0 443 213 dans lequel on cherche également à augmenter la durée de vie des freins de carbone, en mesurant la vitesse de l'avion et l'intensité du freinage, et en comparant les valeurs mesurées à des valeurs maximales prédéterminées, de façon à défreiner un ou plusieurs freins lorsque les deux valeurs mesurées sont inférieures à ces valeurs maximales. Le dispositif de freinage utilisé est du type hydro-mécanique, avec une pression de fluide délivrée aux freins qui est commandée par un distributeur de freinage associé, cette pression (qui est la même pour tous les freins) étant modulée en amont en fonction de l'enfoncement des pédales de frein.

Avec un tel dispositif, l'alternance du freinage est organisée en prévoyant une électro-valve associée à chaque frein d'un groupe de freins et agencée pour supprimer l'ordre de freinage à partir d'un certain seuil de pression modulée, le freinage de l'autre groupe de freins étant assuré par les valves d'anti-dérapage associées aux freins, lesquelles ne sont pas commandées.

Ce type de technique présente là encore l'inconvénient d'induire une certaine discontinuité dans la pression appliquée lorsque l'on franchit ce seuil, car on passe d'un groupe sur deux qui est freiné à un freinage des deux groupes avec une pression globale qui double au passage dudit seuil, avec un effet direct sur la sensation de freinage perçue par le pilote, ce qui l'oblige à manoeuvrer en conséquence les pédales de frein pour préserver le confort des passagers. Le principal inconvénient qui en découle concerne la difficulté du contrôle après relâchement des pédales de frein. Le pilote risque en effet d'être gêné par l'imprécision du repère basé sur la sensation perçue lors du coup de frein précédent en rapport avec l'enfoncement des pédales de frein : si le pilote constate une décélération double pour un même enfoncement des pédales, il sera tenté d'intervenir de façon répétée sur ces pédales pour garder le contrôle du freinage, et ceci aura un effet direct sur le confort des passagers.

L'arrière-plan technologique de l'invention est également illustré par les documents US-A-4 365 847, US-A-3 504 248, US-A-5 116 108, et US-A-5 116 109.

L'invention a pour but de concevoir une technique de freinage ne présentant pas les inconvénients et/ou limitations des techniques précitées.

L'invention a ainsi pour objet un procédé de pilotage d'un dispositif de freinage électro-hydraulique et un dispositif de mise en oeuvre associé, qui permettent d'améliorer la contrôlabilité du freinage d'un aéronef à faible vitesse et à faible décélération commandée, sans pour autant limiter les performances du freinage lorsqu'un freinage maximum est commandé.

L'invention a également pour objet un procédé et un dispositif de pilotage se prêtant particulièrement bien à la réalisation d'un freinage alterné par groupes de roues aux faibles vitesses de roulage, avec une précision répétitive pour le pilote au regard de l'enfoncement des pédales de frein, et un confort optimal pour les passagers au regard de la mise en oeuvre de ce freinage alterné.

Il s'agit plus particulièrement d'un procédé de pilotage d'un dispositif de freinage électro-hydraulique d'un train de roues d'aéronef, dont chaque roue est équipée d'un frein actionné à partir de pédales de frein, par une servo-valve commandée électriquement par une unité de pilotage qui mesure une information correspondant à l'enfoncement desdites pédales, consistant, lorsque l'aéronef roule à faible vitesse, à organiser séparément le freinage pour les roues d'un premier groupe de roues comportant la moitié des roues concernées et pour les roues d'un deuxième groupe de roues comportant l'autre moitié des roues concernées, caractérisé en ce que le freinage est organisé avec l'une ou l'autre de deux lois différentes de variation de la pression commandée en fonction de l'enfoncement des pédales de frein qui est respectivement propre à chaque groupe de roues, dont une première loi de freinage qui est une fonction continûment croissante induisant un couple de freinage à partir d'une faible valeur d'enfoncement, et une deuxième loi de freinage qui est une fonction continûment croissante n'induisant un couple de freinage qu'à partir d'un seuil d'enfoncement prédéterminé desdites pédales qui est notablement supérieur à ladite faible valeur d'enfoncement, lesdites première et deuxième lois de freinage intervenant sur toute la plage active d'enfoncement des pédales de frein, et étant choisies de telle façon que la pression commandée augmente progressivement pour chaque loi depuis une valeur de seuil bas prédéterminée et que l'on ait la même pression commandée pour un enfoncement maximal des pédales de frein, de sorte que la pression globale moyenne varie selon une fonction qui est continue sur toute la plage d'enfoncement des pédales de frein, conformément à la revendication 1.

De préférence, les première et deuxième lois de freinage sont identiques à partir d'une valeur élevée prédéterminée de l'enfoncement des pédales de frein jusqu'à l'enfoncement maximal desdites pédales, ladite valeur élevée prédéterminée étant supérieure au seuil d'enfoncement prédéterminé des pédales à partir duquel un couple de
freinage intervient du fait de la deuxième loi de freinage. Ceci permet d'être assuré, à partir de cet enfoncement, d'avoir tous les freins des deux groupes qui sont alimentés avec la même pression.

Avantageusement alors, la valeur élevée prédéterminée est choisie de telle façon que la pression commandée correspondante soit inférieure à une pression moyenne de seuil d'organes d'anti-dérapage associés aux freins. Ceci favorise les chances d'avoir une équipression sur tous les freins dans la totalité de la zone d'intervention des organes d'anti-dérapage.

Conformément à une autre caractéristique avantageuse, les première et deuxième lois de freinage sont constituées par une ou plusieurs rampes.

Il est par ailleurs intéressant que l'affectation de la loi de freinage soit automatiquement alternée pour les deux groupes de roues chaque fois que les pédales de frein sont relâchées à partir d'un enfoncement inférieur à une valeur basse prédéterminée, de façon que le freinage de chaque groupe de roues soit alternativement organisé conformément à l'une ou l'autre des deux lois de freinage.

Par ailleurs, lorsqu'il s'agit d'un procédé servant à piloter le freinage de deux ensembles de plusieurs paires de roues disposés de part et d'autre d'un plan longitudinal médian de l'aéronef, il est avantageux que chaque groupe de roues comporte une roue de chaque paire pour un ensemble, et les roues de l'autre ensemble qui leur sont symétriques par rapport audit plan longitudinal.

L'invention concerne également un dispositif pour la mise en oeuvre d'un procédé de pilotage présentant l'une au moins des caractéristiques précitées, ledit dispositif comportant une génération hydraulique et une électrovanne associée servant à alimenter un circuit hydraulique auquel se raccordent des servo-valves, une unité de pilotage qui d'une part mesure une information donnée par un capteur associé, correspondant à l'enfoncement des pédales de frein, et d'autre part commande électriquement les servo-valves précitées, chacune de ces servo-valves alimentant un frein de l'un de deux groupes de freins, ledit dispositif étant caractérisé en ce que chaque servo-valve est commandée par l'unité de pilotage précitée selon l'une ou l'autre de deux lois de freinage différentes qui est respectivement propre à chaque groupe de roues, en fonction de l'enfoncement des pédales de frein, dont une première loi de freinage qui est une fonction continûment croissante induisant un couple de freinage à partir d'une faible valeur d'enfoncement, et une deuxième loi de freinage qui est une fonction continûment croissante n'induisant un couple de freinage qu'à partir d'un seuil d'enfoncement prédéterminé notablement supérieur à la faible valeur précitée, lesdites première et deuxième lois de freinage intervenant sur toute la plage active d'enfoncement des pédales de frein, et étant choisies de telle façon que la pression commandée augmente progressivement pour chaque loi depuis une valeur de seuil bas prédéterminée et que l'on ait la même pression commandée pour un enfoncement maximal des pédales de frein, de sorte que la pression globale moyenne varie selon une fonction qui est continue sur toute la plage d'enfoncement des pédales de frein, selon la revendication 7.

De préférence, l'unité de pilotage comporte un moyen de commande permettant d'alterner automatiquement l'affectation d'une loi de freinage à l'un ou l'autre groupe de roues chaque fois que les pédales de frein sont relâchées à partir d'un enfoncement inférieur à une valeur basse prédéterminée.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue schématique d'un train de huit roues équipé d'un dispositif de freinage piloté conformément à l'invention ;
- la figure 2 est un diagramme illustrant deux lois de freinage utilisées conformément à l'invention, avec les variations, en fonction du degré d'enfoncement des pédales de frein, de la pression commandée pour chacun des deux groupes de freins de roues, et de la pression globale moyenne qui en résulte ;
- la figure 3 illustre une variante plus élaborée des deux lois de freinage, ces deux lois présentant notamment une plage identique à partir d'une valeur d'enfoncement élevée des pédales de frein ;
- la figure 4 est une vue schématique analogue à celle de la figure 1, pour un train de douze roues, dont le freinage est piloté de façon analogue.

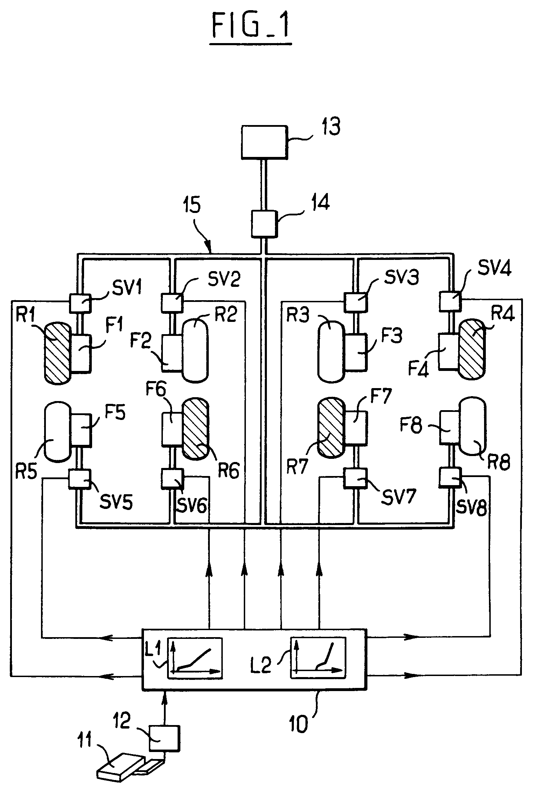

La figure 1 illustre schématiquement un train de huit roues d'aéronef référencé R1 à R8, chacune de ces roues étant équipée d'un frein respectivement F1 à F8 qui seront la plupart du temps des freins à disques de carbone. Il s'agit d'un freinage électro-hydraulique dans lequel chaque frein de roues est actionné par une servo-valve associée, référencée respectivement SV1 à SV8, qui est commandée électriquement par une unité de pilotage 10 mesurant une information correspondant à l'enfoncement des pédales de frein de l'aéronef. La commande des servo-valves est ainsi effectuée en fonction de l'enfoncement des pédales de frein (en général deux pédales), et l'on a représenté schématiquement ici une telle pédale de frein 11 ainsi que son capteur d'enfoncement associé 12 qui transforme l'angle d'inclinaison de la pédale de frein, c'est-à-dire le degré d'enfoncement de celle-ci, en un signal électrique qui est traité dans l'unité de pilotage 10. Chacune des servo-valves SV1 à SV8 est alimentée en fluide par un circuit hydraulique 15 agencé de telle façon que toutes les servo-valves soient simultanément alimentées à la pression maximale donnée par une génération hydraulique de l'aéronef 13, à l'ouverture d'une électro-valve de commande associée 14. Chacune des servo-valves SV1 à SV8 est par ailleurs commandée électriquement par l'unité de pilotage 10, et plus précisément par le calculateur équipant cette unité.

Conformément à une caractéristique de l'invention, l'unité de pilotage 10 est agencée pour envoyer des ordres continus à chacune des servo-valves SV1 à SV8, selon l'une ou l'autre de deux lois de freinage différentes schématisées ici par des diagrammes L1 et L2, qui interviennent sur toute la plage active d'enfoncement des pédales de frein 11, et ce lorsque l'aéronef roule à faible vitesse (on entend par faible vitesse une vitesse généralement inférieure à 70 ou 80 km/h).

Le train de huit roues peut être divisé en deux groupes de roues, et le procédé de pilotage conforme à l'invention consiste à organiser séparément le freinage pour les roues Ri d'un premier groupe de roues comportant la moitié des roues concernées et pour les roues Rj d'un deuxième groupe de roues comportant l'autre moitié des roues concernées, avec une loi de variation de la pression commandée en fonction de l'enfoncement des pédales de freins 11, qui est propre à chaque groupe de roues. On a illustré sur la figure 1 une répartition symétrique (au regard d'un plan longitudinal médian de l'aéronef) qui est favorable au maintien d'une bonne dirigeabilité et à une réduction des efforts de torsion appliqués aux atterrisseurs, répartition dans laquelle l'indice i des roues du premier groupe prend les valeurs 1, 4, 6, 7, tandis que l'indice j des roues du deuxième groupe prend les valeurs 2, 3, 5, 8. On pourrait naturellement organiser différemment les groupes de roues, à condition toutefois de respecter la symétrie précitée : un autre mode de groupement possible consisterait par exemple à choisir les valeurs 1, 2, 3, 4 pour l'indice i, et les valeurs 5, 6, 7, 8 pour l'indice j, un tel groupement étant tout particulièrement favorable lorsqu'on cherche à minimiser les efforts de torsion appliqués.

La première loi de freinage L1 est une fonction continûment croissante induisant un couple de freinage à partir d'une faible valeur d'enfoncement des pédales de frein 11, tandis que la deuxième loi de freinage L2 est une fonction continûment croissante n'induisant un couple de freinage qu'à partir d'un seuil d'enfoncement prédéterminé desdites pédales. De plus, les deux lois de freinage L1 et L2 sont en outre choisies de telle façon que l'on ait la même pression commandée pour un enfoncement maximal des pédales de frein 11.

Ceci permet d'améliorer considérablement la précision du freinage de l'aéronef à faible vitesse et faible décélération commandée, grâce à la restitution précise d'une loi globale de freinage parfaitement répétitive qui lie la position des pédales de frein à la décélération de l'aéronef, lorsque la vitesse de l'aéronef est faible et la décélération commandée est également faible. En effet, pour de faibles décélérations commandées, on parvient à limiter les pressions de freinage sur un groupe donné de freins, et à générer des pressions moyennes et contrôlables dans l'autre groupe de freins, ce qui permet d'obtenir une décélération faible mais à tout moment contrôlable. Naturellement, lorsque l'aéronef roule à des vitesses élevées, l'unité de pilotage fait en sorte que les deux lois de freinage soient identiques sur toute la plage active d'enfoncement des pédales de frein, de façon que toutes les roues du train soient alors systématiquement freinées de manière identique.

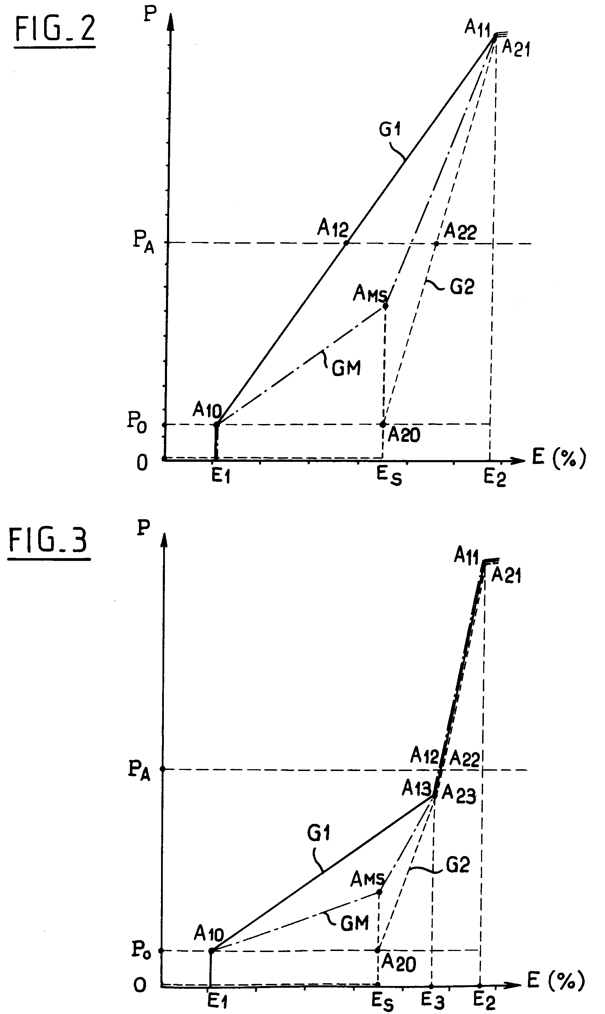

La caractéristique de l'invention, selon laquelle on affecte des lois de pression en fonction de la position des pédales de frein qui sont différentes pour chaque groupe de freins, avec un pilotage par le calculateur de l'unité de pilotage qui d'une part acquiert le signal électrique correspondant à l'enfoncement des pédales de frein et d'autre part adresse à chaque servo-valve un ordre de freinage relatif à la loi de freinage qui lui est affectée, sera mieux comprise en se référant au diagramme de la figure 2 qui illustre deux lois de freinage susceptibles d'être utilisées conformément à l'invention, ledit diagramme donnant les variations, en fonction du degré d'enfoncement des pédales de frein, de la pression commandée pour chacun des deux groupes de freins de roues, et de la pression globale moyenne qui en résulte, étant entendu que l'aéronef roule alors à faible vitesse.

Le diagramme de la figure 2 donne ainsi les variations de la pression commandée P en fonction du pourcentage d'enfoncement des pédales de frein E. Un premier graphe G1 correspond à la première loi de freinage L1 qui est une fonction continûment croissante induisant un couple de freinage à partir d'une faible valeur E1 d'enfoncement des pédales de frein (cette faible valeur est ici non nulle pour une meilleure précision). La pression de freinage induit ainsi un couple de freinage à partir de la valeur E1, qui peut être de l'ordre de 15 %, et l'on obtient un couple de freinage à partir du moment où la pression commandée est supérieure à un seuil prédéterminé Po qui est fonction du type de frein utilisé (ce seuil de pression est en général voisin de 10 à 15 X 10⁵ Pa). Sur le diagramme de la figure 2, le graphe G1 associé à la première loi de freinage L1, représenté en trait continu, va d'un point A10 qui marque le début de l'activation du freinage, à un point A11 correspondant à un enfoncement maximal E2 des pédales de frein (E2 étant par exemple voisin de 95 %). Le graphe G2 associé à la deuxième loi de freinage L2 correspond à une fonction continûment croissante qui n'induit un couple de freinage qu'à partir d'un seuil d'enfoncement prédéterminé Es des pédales de frein. Le graphe G2 (représenté en pointillés) relie l'origine à un point A20 qui correspond à la pression minimale PO pour le seuil d'enfoncement prédéterminé Es, par un tronçon à valeur faible constante (comme illustré ici) ou en variante par un tronçon croissant régulièrement à partir de la valeur d'enfoncement E1 jusqu'au point A20 (par exemple par une rampe) Le graphe G1 relie ensuite le point A20 à un point A21 qui correspond à l'enfoncement maximal des pédales de frein E2, ce point A21 étant essentiellement confondu avec le point A11 précité de telle façon que le pilote retrouve la même pression commandée pour un enfoncement maximal des pédales de frein. A titre indicatif, on pourra choisir une valeur de seuil Es de l'ordre de 60 à 65 %. Le graphe GM correspond à la pression globale moyenne délivrée, et ce graphe (illustré en traits mixtes) est constitué par deux tronçons rectilignes qui relient le point A10 à un point intermédiaire AMS, puis ce point AMS au point A11 ou A21. On constate que le graphe GM est une fonction continue, ne présentant pas de discontinuité pour la pression commandée (et donc pour le couple de freinage) au passage de la valeur de seuil Es.

Ainsi, tant que l'enfoncement des pédales est inférieur au seuil Es, l'un des groupes de roues est freiné avec une pression commandée qui correspond au degré d'enfoncement concerné, tandis que l'autre groupe de roues est défreiné.

Il peut en outre s'avérer intéressant de faire en sorte que l'affectation de la loi de freinage soit automatiquement alternée pour les deux groupes de roues Ri, Rj, chaque fois que les pédales de frein 11 sont relâchées à partir d'un faible enfoncement de celles-ci, de façon que le freinage de chaque groupe de roues soit alternativement organisé conformément à l'une ou l'autre des deux lois de freinage L1, L2. Cette alternance de loi de freinage présente un intérêt tout particulier aux vitesses faibles pour le contrôle de la manoeuvrabilité de l'aéronef. Dans ce cas, on s'arrangera de préférence pour que l'alternance de l'affectation de la loi de freinage n'intervienne que lorsque les pédales de frein sont relâchées à partir d'un enfoncement inférieur à une valeur basse prédéterminée, choisie proche de E1 (c'est-à-dire en général de 15 à 20 % selon le type de freins utilisés).

Sur la figure 1, on a illustré schématiquement ce principe pour un train constitué par deux ensembles de paires de roues disposés de part et d'autre d'un plan longitudinal médian de l'aéronef, en hachurant les roues d'un groupe, et l'on constate que chaque groupe de roues Ri, Rj, comporte une roue de chaque paire pour un ensemble, et les roues de l'autre ensemble qui leur sont symétriques par rapport à ce plan longitudinal. L'unité de pilotage 10 comporte alors de préférence un moyen de commande (non représenté ici), permettant d'alterner automatiquement l'affectation d'une loi de freinage L1, L2 à l'un ou l'autre groupe de roues Ri, Rj, chaque fois que les pédales de frein 11 sont relâchées, ce moyen de commande n'intervenant toutefois que lorsque les pédales de freins sont relâchées à partir d'un enfoncement inférieur à une valeur basse prédéterminée.

Le diagramme illustré sur la figure 2 est seulement donné à titre d'exemple pour faire comprendre que chacune des servo-valves SVi, SVj alimentant un frein de l'un des deux groupes Fi, Fj, est pilotée par l'unité de pilotage 10 selon une loi de freinage prédéterminée L1 ou L2 qui est propre à chaque groupe de roues Ri, Rj, en fonction de l'enfoncement des pédales de frein 11. Sur la figure 2, chaque graphe G1, G2 est constitué d'une rampe unique, de sorte que le graphe de la pression globale moyenne (GM) correspondante est constitué par deux rampes successives. Le graphe GM est une fonction continue sur toute la plage d'enfoncement des pédales de frein, c'est-à-dire qu'on est parvenu à supprimer toute discontinuité au passage de la valeur de seuil Es, et ceci tant lors d'une augmentation de la pression commandée que lors d'une diminution de cette pression, de sorte que l'action de freinage est non seulement progressive, mais aussi réversible lorsque le pilote relâche les pédales de frein. La réversibilité de l'action de freinage constitue un avantage très important dans la mesure où le pilote conserve le même repère, en constatant une même décélération pour un même enfoncement des pédales de freins, de sorte que cela confère une grande sensation de confort pour le pilote qui n'est ainsi nullement tenté d'intervenir plusieurs fois sur les pédales de frein pour tenter de compenser l'effet d'une discontinuité au passage d'une valeur de seuil. Une telle décélération exempte d'hystérésis par rapport à l'enfoncement des pédales de frein constitue un avantage pratique très important que l'on ne pouvait pas obtenir avec les techniques antérieures précitées.

Les graphes illustrés sur la figure 2 sont en réalité représentatifs de deux lois linéaires dont l'action peut paraître quelque peu rudimentaire. En effet, on peut constater que pour une valeur de pression commandée atteignant la valeur PA qui correspond à une moyenne de seuil des organes d'anti-dérapage traditionnellement associés aux freins de roues, les points A12 et A22 associés correspondent à des degrés d'enfoncement différents des pédales de frein : de ce fait, lorsque le pilote enfonce les pédales de frein en se rapprochant du seuil, la pression commandée du premier groupe de freins atteint la valeur PA, ce qui initie le déclenchement des organes d'anti-dérapage associés, alors que les roues de l'autre groupe sont encore défreinées, ce qui risque de constituer un certain inconfort dans la sensation de freinage. Un autre inconvénient réside dans le fait que les graphes des deux lois de freinage ne se rejoignent qu'au point d'enfoncement maximal des pédales de frein : ceci signifie que pour une décélération élevée demandée, on aura des valeurs de pression commandées qui seront sensiblement différentes pour les deux groupes de freins de roues.

C'est pourquoi on a illustré sur la figure 3 une autre variante des deux lois de freinage, avec laquelle il est possible de supprimer les deux inconvénients précités.

Le graphe G1 (en traits continus) associé à la première loi de freinage est maintenant constitué de deux rampes, une première rampe reliant le point A10 du graphe précédent à un point A13 correspondant à une valeur élevée prédéterminée E3 d'enfoncement des pédales de frein, puis une rampe reliant ce point A13 au point A11 précédent. Le graphe G2 (en pointillés) associé à la deuxième loi de freinage n'induit un couple de freinage qu'à partir du seuil d'enfoncement Es, c'est-à-dire au niveau du point A20, avec avant ce point A20 une valeur faible constante ou une valeur croissant régulièrement (par exemple une rampe à partir de la valeur d'enfoncement E1). On trouve là encore deux rampes, avec une première rampe reliant ce point A20 à un point A23 qui est autant que faire se peut confondu avec le point A13 précité, et une deuxième rampe reliant ce point A23 au point A21 lequel est essentiellement confondu avec le point A11. Dans ce cas, à partir d'un enfoncement supérieur à la valeur élevée prédéterminée E3 (qui correspond par exemple à 80 %), les première et deuxième lois de freinage L1, L2, sont identiques jusqu'à l'enfoncement maximal des pédales de frein. Tous les freins sont alors alimentés avec la même pression, comme dans le cas d'un freinage enclenché lorsque l'aéronef roule à des vitesses élevées, ce qui confère une sécurité appréciable et une sensation de confort très importante tant pour le pilote que pour les passagers. On évite en effet tout déséquilibre dans le freinage des deux groupes de freins, tout en conservant la possibilité d'organiser l'affectation des lois de freinage de manière alternée lorsque les pédales de frein sont relâchées à partir d'un enfoncement inférieur à une valeur basse prédéterminée, par exemple proche de la valeur E1. Le graphe de la pression globale moyenne correspondante GM (illustré en traits mixtes) est maintenant constitué de trois rampes reliant successivement les points A10 à un point AMS (qui correspond au seuil d'enfoncement Es), ce point AMS au point A23 ou A13, et enfin le point A23 au point A21 ou A11. Là encore, les trois rampes successives se raccordent entre elles, sans qu'il y ait de discontinuité au passage d'une valeur de transition. Il sera naturellement avantageux de choisir les lois de freinage de telle façon que la pression commandée correspondant à la valeur élevée prédéterminée d'enfoncement E3 (à partir de laquelle cette pression est la même pour les deux groupes de freins de roues), soit légèrement inférieure à une valeur moyenne de seuil PA des organes d'anti-dérapage associés aux freins de roues. Ainsi, les organes d'anti-dérapage n'interveniennent qu'après dépassement du seuil d'enfoncement E3 des pédales de frein, donc dans une zone où la pression commandée est la même sur les deux groupes de freins de roues.

Il va de soi que le procédé de pilotage et le dispositif de mise en oeuvre associé conformes à l'invention peuvent être envisagés pour des trains de roues possédant un nombre de roues différent de huit, à condition toutefois que le nombre total des roues soit un nombre pair de façon à pouvoir diviser les roues en deux groupes d'un même nombre de roues, ces deux groupes étant de préférence agencés en respectant la symétrie par rapport au plan longitudinal médian de l'aéronef.

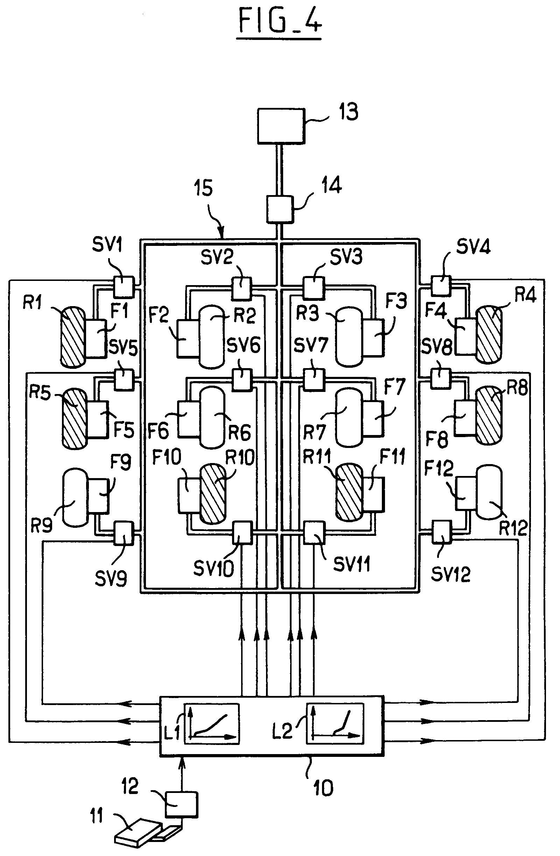

La figure 4 illustre ainsi un schéma, qui est à rapprocher de celui de la figure 1, pour un train de douze roues, dont le freinage est piloté de façon analogue à ce qui vient d'être décrit.

Sur la figure 4, on trouve ainsi douze roues référencées R1 à R12, avec leur frein associé F1 à F12 et les servo-valves de commande SV1 à SV12 qui sont commandées électriquement à partir de l'unité de pilotage 10. Pour plus de clarté, on a hachuré les roues d'un premier groupe de roues Ri, l'indice i valant ici 1, 4, 5, 8, 10, 11, les roues Rj de l'autre groupe de roues n'étant pas hachurées, les valeurs de l'indice j étant égales à 2, 3, 6, 7, 9, 12.

On pourra là encore organiser le freinage de telle façon que l'affectation des deux lois de freinage soit automatiquement alternée pour les deux groupes de roues chaque fois que les pédales de frein sont relâchées à partir d'un enfoncement inférieur à une valeur basse prédéterminée, pour avoir ainsi un groupe de roues alternativement freiné conformément à l'une ou l'autre des deux lois de freinage L1, L2, et ce sur toute la plage active d'enfoncement des pédales de frein. On notera que les deux groupes de roues ont été choisis ici en respectant encore la règle de symétrie au regard du plan longitudinal médian de l'avion.

## Revendications

1. Procédé de pilotage d'un dispositif de freinage électro-hydraulique d'un train de roues d'aéronef, dont chaque roue est équipée d'un frein actionné à partir de pédales de frein (11), par une servo-valve commandée électriquement par une unité de pilotage qui mesure une information correspondant à l'enfoncement desdites pédales, consistant, lorsque l'aéronef roule à faible vitesse, à organiser séparément le freinage pour les roues (Ri) d'un premier groupe de roues comportant la moitié des roues concernées et pour les roues (Rj) d'un deuxième groupe de roues comportant l'autre moitié des roues concernées, caractérisé en ce que le freinage est organisé avec l'une ou l'autre de deux lois différentes de variation de la pression commandée en fonction de l'enfoncement des pédales de frein (11) qui est respectivement propre à chaque groupe de roues, dont une première loi de freinage (L1) qui est une fonction continûment croissante induisant un couple de freinage à partir d'une faible valeur (E1) d'enfoncement, et une deuxième loi de freinage (L2) qui est une fonction continûment croissante n'induisant un couple de freinage qu'à partir d'un seuil d'enfoncement prédéterminé (Es) desdites pédales qui est notablement supérieur à ladite faible valeur (E1) d'enfoncement, lesdites première et deuxième lois de freinage intervenant sur toute la plage active d'enfoncement des pédales de frein (11), et étant choisies de telle façon que la pression commandée augmente progressivement pour chaque loi depuis une valeur de seuil bas prédéterminée (Po) et que l'on ait la même pression commandée pour un enfoncement maximal (E2) des pédales de frein (11), de sorte que la pression globale moyenne varie selon une fonction qui est continue sur toute la plage d'enfoncement des pédales de frein

2. Procédé de pilotage selon la revendication 1, caractérisé en ce que les première et deuxième lois de freinage (L1, L2) sont identiques à partir d'une valeur élevée prédéterminée (E3) de l'enfoncement des pédales de frein (11) jusqu'à l'enfoncement maximal desdites pédales ladite valeur élevée prédéterminée (E3) étant supérieure au seuil d'enfoncement prédéterminé (Es) des pédales à partir duquel un couple de freinage intervient du fait de la deuxième loi de freinage (L2).

3. Procédé de pilotage selon la revendication 2, caractérisé en ce que la valeur élevée prédéterminée (E3) est choisie de telle façon que la pression commandée correspondante soit inférieure à une pression moyenne de seuil (PA) d'organes d'anti-dérapage associés aux freins.

4. Procédé de pilotage selon l'une des revendications 1 à 3, caractérisé en ce que les première et deuxième lois de freinage (L1, L2) sont constituées par une ou plusieurs rampes.

5. Procédé de pilotage selon l'une des revendications 1 à 3, caractérisé en ce que l'affectation de la loi de freinage est automatiquement alternée pour les deux groupes de roues chaque fois que les pédales de frein (11) sont relâchées à partir d'un enfoncement inférieur à une valeur basse prédéterminée, de façon que le freinage de chaque groupe de roues soit alternativement organisé conformément à l'une ou l'autre des deux lois de freinage (L1, L2).

6. Procédé de pilotage selon l'une des revendication 1 à 5, servant à piloter le freinage de deux ensembles de plusieurs paires de roues disposés de part et d'autre d'un plan longitudinal médian de l'aéronef, caractérisé en ce que chaque groupe de roues (Ri, Rj) comporte une roue de chaque paire pour un ensemble, et les roues de l'autre ensemble qui leur sont symétriques par rapport audit plan longitudinal.

7. Dispositif de mise en oeuvre du procédé de pilotage selon l'une quelconque des revendications 1 à 6, comportant une génération hydraulique (13) et une électrovanne (14) associée servant à alimenter un circuit hydraulique (15) auquel se raccordent des servo-valves (SVi, SVj), une unité de pilotage (10) qui d'une part mesure une information donnée par un capteur associé (12), correspondant à l'enfoncement des pédales de frein, et d'autre part commande électriquement les servo-valves précitées (SVi, SVj), chacune de ces servo-valves (SVi, SVj) alimentant un frein respectif de l'un de deux groupes de freins (Fi, Fj), caractérisé en ce que chaque servo-valve (SVi, SVj) est commandée par l'unité de pilotage précitée (10) selon l'une ou l'autre de deux lois de freinage différentes (L1, L2) qui est respectivement propre à chaque groupe de roues (Ri, Rj), en fonction de l'enfoncement des pédales de frein (11), dont une première loi de freinage qui est une fonction continûment croissante induisant un couple de freinage à partir d'une faible valeur d'enfoncement, et une deuxième loi de freinage qui est une fonction continûment croissante n'induisant un couple de freinage qu'à partir d'un seuil d'enfoncement prédéterminé notablement supérieur à la faible valeur précitée, lesdites première et deuxième lois de freinage intervenant sur toute la plage active d'enfoncement des pédales de frein, et étant choisies de telle façon que la pression commandée augmente progressivement pour chaque loi depuis une valeur de seuil bas prédéterminée et que l'on ait la même pression commandée pour un enfoncement maximal des pédales de frein, de sorte que la pression globale moyenne varie selon une fonction qui est continue sur toute la plage d'enfoncement des pédales de frein.

8. Dispositif selon la revendication 7, caractérisé en ce que l'unité de pilotage (10) comporte un moyen de commande permettant d'alterner automatiquement l'affectation d'une loi de freinage (L1, L2) à l'un ou l'autre groupe de roues (Ri, Rj) chaque fois que les pédales de frein (11) sont relâchées à partir d'un enfoncement inférieur à une valeur basse prédéterminée.

## Claims

1. A method of controlling an electrohydraulic braking apparatus for an aircraft wheel set, in which each wheel is fitted with a brake that is actuated from brake pedals (11) by means of a servo-valve that is electrically controlled by a control unit which measures an information corresponding to the depression of said pedals, consisting, while the aircraft is taxiing, in separately organizing braking for the wheels (Ri) in a first group of wheels comprising half of the wheels in question and for the wheels (Rj) of a second set of wheels comprising the other half of the wheels in question, characterized in that braking is performed in compliance with one or the other of two different relationships between controlled pressure as a function of the depression of brake pedals (11) that is respectively specific to each group of wheels, in which a first braking relationship (L1) is a continuously increasing function that causes a braking torque to be applied from a low value of pedal depression (E1), and a second braking relationship (L2) which is a continuously increasing function that causes a braking torque to be applied only from a predetermined threshold (Es) of pedal depression which is substantially higher than the said low value of pedal depression (E1), said first and second relationships acting over the entire active range of depression of brake pedals (11) and being selected in such a manner that for each relationship the controlled pressure progressively increases from a predetermined low threshold value (Pₒ), and that the same controlled pressure is ensured at maximum brake pedal depression (E2), so that the mean overall pressure varies in compliance with a function which is continuous over the entire range of brake pedal depression.

2. A control method according to claim 1, characterized in that the first and second braking relationships (L1, L2) are identical from a predetermined high value (E3) of depression of the brake pedals (11) up to maximum depression of said pedals, the said predetermined high value (E3) being higher than the predetermined threshold (Es) of pedal depression from which a braking torque is applied in compliance with the second braking relationship (L2).

3. A control method according to claim 2, characterized in that the predetermined high value (E3) is selected so that the corresponding controlled pressure is less than a mean threshold pressure (P_{A}) of anti-skid members associated with the brakes.

4. A control method according to any one of claims 1 to 3, characterized in that the first and second braking relationships (L1, L2) are constituted by one or more slopes.

5. A control method according to any one of claims 1 to 4, characterized in that braking relationship allocation is automatically alternated between the two groups of wheels each time the brake pedals (11) are released from an amount of depression that is less than a predetermined low value, such that the braking applied to each group of wheels is organized alternately in application of one or the other of the two braking relationships (L1, L2).

6. A control method according to any one of claims 1 to 5, for use in controlling the braking of two subsets each comprising a plurality of pairs of wheels disposed on either side of a longitudinal midplane of the aircraft, characterized in that each group of wheels (Ri, Rj) comprises one wheel in each pair for one subset, and the wheels of the other subset that are symmetrical thereto about the said longitudinal plane.

7. An apparatus for implementing the control method according to any one of claims 1 to 6, including a hydraulic generator (13) and an associated electrically controlled valve (14) for feeding a hydraulic circuit (15) to which servo-valves (SVi, SVj) are connected, a control unit (10) which measures an information given by an associated sensor (12) corresponding to the degree of brake pedal depression and which electrically controls the above-mentioned servo-valves (SVi, SVj), with each of said servo-valves (SVi, SVj) feeding a respective brake in one of two groups of brakes (Fi, Fj), characterized in that each servo-valve (Si, SVj) is controlled by the above-mentioned control unit (10) in compliance with one or the other of two different braking relationships (L1, L2) which is respectively specific to each group of wheels (Ri, Rj), as a function of the degree to which the brake pedals (11) are depressed, in which a first braking relationship is a continuously increasing function that causes a braking torque to be applied from a low value of pedal depression, and a second braking relationship which is a continuously increasing function that causes a braking torque to be applied only from a predetermined threshold of pedal depression which is substantially higher than the above-mentioned low value, the said first and second relationships acting over the entire active range of brake pedal depression and being selected in such a manner that for each relationship the controlled pressure progressively increases from a predetermined low threshold value, and that the same controlled pressure is ensured at maximum brake pedal depression, so that the mean overall pressure varies in compliance with a function which is continuous over the entire range of brake pedal depression.

8. An apparatus according to claim 7, characterized in that the control unit (10) includes control means enabling the allocation of a braking relationship (L1, L2) to one and the other of the groups of wheels (Ri, Rj) to be alternated automatically each time the brake pedals (11) are released from a degree of depression that is less than a predetermined low value.

## Patentansprüche

1. Verfahren zum Steuern einer elektrohydraulischen Bremsvorrichtung eines Radsatzes eines Flugzeuges, wobei jedes Rad eine Bremse hat, die mittels Bremspedalen (11) über ein Servoventil betätigt wird, welches elektrisch von einer Steuereinheit betätigt wird, die eine Information mißt, die der Absenkung der Pedale entspricht, wobei das Verfahren darin besteht, beim langsamen Dahinrollen des Flugzeuges das Abbremsen für die Räder (Ri) einer ersten Radgruppe, die die eine Hälfte der betreffenden Räder umfaßt, und für die Räder (Rj) einer zweiten Radgruppe, die die andere Hälfte der betreffenden Räder umfaßt, getrennt durchzuführen, dadurch **gekennzeichnet**, daß das Abbremsen nach einer von zwei verschiedenen Vorschriften zum Ändern des gesteuerten Druckes in Abhängigkeit der Senkung der Bremspedale (11) erfolgt, die der jeweiligen Radgruppe zugeordnet ist, wobei eine erste Bremsvorschrift (L1) eine stetig steigende Funktion ist und ab einer Senkung um einen geringen Wert (E1) ein Bremsmoment induziert, und wobei eine zweite Bremsvorschrift (L2) eine stetig steigende Funktion ist und erst ab einem vorbestimmten Schwellwert (Es) der Senkung der Pedale, welcher beträchtlich größer ist als der geringe Wert (E1) der Senkung, ein Bremsmoment induziert, wobei die erste und die zweite Bremsvorschrift den gesamten aktiven Bereich der Senkung der Bremspedale (11) abdecken und so gewählt sind, daß der gesteuerte Druck bei jeder Vorschrift von einem vorbestimmten niedrigen Schwellwert (Po) an fortschreitend zunimmt, und daß man für eine maximale Senkung (E2) der Bremspedale (11) denselben gesteuerten Druck erhält, so daß der mittlere Gesamtdruck sich gemäß einer Funktion ändert, die über den gesamten Bereich der Senkung der Bremspedale stetig ist.

2. Verfahren zum Steuern nach Anspruch 1, dadurch **gekennzeichnet**, daß die erste und die zweite Bremsvorschrift (L1, L2) ab einem vorbestimmten hohen Wert (E3) der Senkung der Bremspedale (11) bis zur maximalen Senkung der Pedale identisch sind, wobei der vorbestimmte hohe Wert (E3) höher ist als der vorbestimmte Schwellwert (Es) der Senkung der Pedale, ab dem ein Bremsmoment gemäß der zweiten Bremsvorschrift (L2) wirksam ist.

3. Verfahren zum Steuern nach Anspruch 2, dadurch **gekennzeichnet**, daß der vorbestimmte hohe Wert (E3) so gewählt ist, daß der entsprechende gesteuerte Druck unter einem mittleren Schwellendruck (PA) von mit den Bremsen verbundenen Antiblockiervorrichtungen liegt.

4. Verfahren zum Steuern nach einem der Ansprüche 1 bis 3, dadurch **gekennzeichnet**, daß die erste und die zweite Bremsvorschrift (L1, L2) eine oder mehrere Steigungen umfassen.

5. Verfahren zum Steuern nach einem der Ansprüche 1 bis 3, dadurch **gekennzeichnet**, daß die Zuordnung der Bremsvorschrift automatisch zwischen den beiden Radgruppen wechselt, wenn die Bremspedale (11) nach einer Senkung, die einen vorbestimmten niedrigen Wert unterschreitet, losgelassen werden, so daß das Abbremsen jeder Radgruppe abwechselnd nach der einen und nach der anderen der beiden Bremsvorschriften (L1, L2) durchgeführt wird.

6. Verfahren zum Steuern nach einem der Ansprüche 1 bis 5, welches zum Steuern des Abbremsens zweier Anordnungen aus mehreren Radpaaren dient, die beiderseits einer sich in Längsrichtung erstreckenden Mittelebene des Flugzeuges vorgesehen sind, dadurch **gekennzeichnet**, daß jede Radgruppe (Ri, Rj) jeweils ein Rad jedes Paares aus einer Anordnung sowie diejenigen Räder der anderen Anordnung enthält, die bezüglich der in Längsrichtung verlaufenden Ebene dazu symmetrisch sind.

7. Vorrichtung zum Durchführen des Verfahrens zum Steuern nach einem der Ansprüche 1 bis 6, mit einer Hydraulikquelle (13) und einem damit verbundenen Magnetventil (14) zum Speisen eines Hydraulikkreises (15) mit daran angeschlossenen Servoventilen (SVi, SVj), einer Steuereinheit (10), die einerseits eine von einem zugehörigen Aufnehmer (12) gelieferte Information mißt, welche der Senkung der Bremspedale entspricht, und andererseits die Servoventile (SVi, SVj) elektrisch betätigt, wobei jedes dieser Servoventile (SVi, SVj) eine Bremse aus einer von zwei Bremsengruppen (Fi, Fj) speist, dadurch **gekennzeichnet**, daß jedes Servoventil (SVi, SVj) von der Steuereinheit (10) gemäß einer von zwei verschiedenen Bremsvorschriften (L1, L2), die der jeweiligen Radgruppe (Ri, Rj) zugeordnet ist, in Abhängigkeit der Senkung der Bremspedale (11) betätigt wird, wobei eine erste Bremsvorschrift eine stetig steigende Funktion ist und ab einer Senkung um einen geringen Wert ein Bremsmoment induziert, und wobei eine zweite Bremsvorschrift eine stetig steigende Funktion ist und erst ab einem vorbestimmten Schwellwert der Senkung der Pedale, welcher beträchtlich größer ist als der geringe Wert der Senkung, ein Bremsmoment induziert, wobei die erste und die zweite Bremsvorschrift den gesamten aktiven Bereich der Senkung der Bremspedale abdecken und so gewählt sind, daß der gesteuerte Druck bei jeder Vorschrift von einem vorbestimmten niedrigen Schwellwert an fortschreitend zunimmt, und daß man für eine maximale Senkung der Bremspedale denselben gesteuerten Druck erhält, so daß der mittlere Gesamtdruck sich gemäß einer Funktion ändert, die über den gesamten Bereich der Senkung der Bremspedale stetig ist.

8. Vorrichtung nach Anspruch 7, dadurch **gekennzeichnet**, daß die Steuereinheit (10) eine Betätigungsvorrichtung hat, die ein automatisches Umschalten der Zuordnung einer Bremsvorschrift (L1, L2) von der einen auf die andere Radgruppe (Ri, Rj) ermöglicht, wenn die Bremspedale (11) nach einer Senkung, die einen vorbestimmten niedrigen Wert unterschreitet, losgelassen werden.
